# EUROPEAN PATENT SPECIFICATION

(11) **EP 3 737 127 B1**
(45) Date of publication and mention of the grant of the patent: **24.09.2025**
(21) Application number: 19173865.7
(22) Date of filing: 10.05.2019
(51) Int. Cl.: H04W 8/12, H04W 8/06

(54) **MOBILE COMMUNICATION NETWORK ARRANGEMENT AND METHOD FOR OPERATING A MOBILE COMMUNICATION NETWORK ARRANGEMENT TO SUPPORT INTER-CORE NETWORK ROAMING**
MOBILKOMMUNIKATIONSNETZANORDNUNG UND VERFAHREN ZUM BETRIEB EINER MOBILKOMMUNIKATIONSNETZANORDNUNG ZUR UNTERSTÜTZUNG VON KERNÜBERGREIFENDEM NETZWERK-ROAMING
AGENCEMENT DE RÉSEAU DE COMMUNICATION MOBILE ET PROCÉDÉ DE FONCTIONNEMENT D'UN AGENCEMENT DE RÉSEAU DE COMMUNICATION MOBILE POUR PRENDRE EN CHARGE UNE ITINÉRANCE DE RÉSEAU INTER-COEURS

(43) Date of publication of application: 11.11.2020
(73) Proprietor: NTT DOCOMO, INC., Chiyoda-ku Tokyo 100-6150 (JP)
(72) Inventor: SAMA, Malla Reddy, 80687 Munich (DE); MUTIKAINEN, Jari, 80687 Munich (DE); THAKOLSRI, Srisakul, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- NOKIA ET AL: "Proposal for HSS discovery", vol. CT WG3, no. Reno, US; 20190513 - 20190517, 7 May 2019 (2019-05-07), XP051735248, Retrieved from the Internet <URL:http://www.3gpp.org/ftp/Meetings%5F3GPP%5FSYNC/SA2/Docs/S2%2D1905020%2Ezip> [retrieved on 20190507]
- ERICSSON: "IMS discovery for HSS interface type, and user HSS instance", vol. SA WG2, no. Reno, Nevada; 20190513 - 20190517, 7 May 2019 (2019-05-07), XP051735236, Retrieved from the Internet <URL:http://www.3gpp.org/ftp/Meetings%5F3GPP%5FSYNC/SA2/Docs/S2%2D1905009%2Ezip> [retrieved on 20190507]
- ERICSSON: "HSS Discovery and Interface Type Selection", vol. SA WG2, no. Reno, Nevada; 20190513 - 20190517, 7 May 2019 (2019-05-07), XP051735237, Retrieved from the Internet <URL:http://www.3gpp.org/ftp/Meetings%5F3GPP%5FSYNC/SA2/Docs/S2%2D1905010%2Ezip> [retrieved on 20190507]
- "3rd Generation Partnership Project; Technical Specification Group Services and System Aspects; Study on User data interworking, coexistence and migration (Release 16)", 3GPP STANDARD; TECHNICAL REPORT; 3GPP TR 23.732, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 28 March 2019 (2019-03-28), pages 1 - 75, XP051722958
- "3rd Generation Partnership Project; Technical Specification Group Services and System Aspects; Study on Enhanced IMS to 5GC Integration (Release 16)", 3GPP STANDARD; TECHNICAL REPORT; 3GPP TR 23.794, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.0.0, 14 March 2019 (2019-03-14), pages 1 - 83, XP051722778
- HUAWEI ET AL: "HSS discovery via NRF", vol. SA WG2, no. Reno, Nevada, USA; 20190513 - 20190517, 7 May 2019 (2019-05-07), XP051735901, Retrieved from the Internet <URL:http://www.3gpp.org/ftp/Meetings%5F3GPP%5FSYNC/SA2/Docs/S2%2D1905713%2Ezip> [retrieved on 20190507]

## Description

The present disclosure relates to mobile communication network arrangements and methods for operating a mobile communication network arrangement to support inter-core network roaming.

Many network operators have begun planning to deploy Fifth Generation (5G) mobile networks. As with their Fourth Generation (4G) Long Term Evolution (LTE) technology, the 3^{rd} Generation Partnership Project (3GPP) has proposed their own 5G technology. The 3GPP is currently defining both a 5G core network **--** 5GCand a 5G radio access technology **--** 5G New Radio (NR).

The 3GPP has proposed various options for mobile network operators to deploy their 3GPP 5G technologies, many of which integrate both 4G and 5G components to provide radio access to users. It is expected that mobile network operators will select between the various available 3GPP options as they gradually deploy more 5G technologies across their respective networks.

While different 4G and 5G integration options may help expedite 5G deployment, the interworking between 4G and 5G networks may complicate certain operations. One such operation is roaming. Traditionally, a user equipment (UE) uses roaming to operate on a mobile network that is not its home network. Because the UE is not on its home network (Home Public Land Mobile Network (HPLMN)), the visited mobile network (Visited Public Land Mobile Network (VPLMN), also called the serving network) needs to interface with the home mobile network to verify the UE's subscriber information and, if applicable, set up a data connection via the HPLMN.

This roaming procedure has been fully developed for legacy networks as well as some configurations for 5G. The 3GPP, however, has not provided solutions for all 5G deployment options. Thus, mobile network operators may desire new solutions that can support roaming even for complex 5G deployment configurations.

Nokia, Nokia Shanghai-Bell; Proposal for HSS discovery; 3GPP TSG-SA WG2 Meeting #133; S2-1905020; Reno, Nevada (US); 13 - 17 May 2019 discloses a method for HSS discovery wherein the CSCF is configured to send to a network function repository function (NRF) a HSS discovery request; receive from the NRF a replay that identifies a home subscriber service, in other words HSS information, in the same network of the CSCF; and finally sending an Hss request to the HSS.

Ericsson; IMS discovery for HSS interface type, and user HSS instance; 3GPP TSG-SA WG2 Meeting #133; S2-1905009; Reno, Nevada (US); 13 - 17 May, 2019 discloses a solution enabling an IMS entity to discover, in a deployment where both legacy HSS and HSS ley in the same home network as the IMS entity.

Ericsson: HSS Discovery and Interface Type Selection; 3GPP TSG-SA WG2 Meeting #133; S2-1905010; Reno, Nevada (US); 13 - 17 May, 2019 discloses methods for SBI capable HSS discovery and selection.

3rd Generation Partnership Project; Technical Specification Group Services and System Aspects; Study on User data interworking, coexistence and migration (Release 16); 3GPP TR 23.732 V16.0.0 (2019-03) discloses methods for interoperability and user data across versions of mobile networks and specifically to 5G vs 4G/3G/2G. The methods disclosed assume that the different components lay in the same network.

3rd Generation Partnership Project; Technical Specification Group Services and System Aspects; Study on Enhanced IMS to 5GC Integration (Release 16); 3GPP TR 23.794 V1.0.0 (2019-03) proposes methods to use the NRF. The methods disclosed assume that the different components lay in the same network.

Huawei, HiSilicon; HSS discovery via NRF; 3GPP TSG-SA WG2 Meeting #133 S2-1905713; Reno, Nevada, USA; 13 - 17 May 2019 discloses methods for flexible scaling of the HSS.

According to one embodiment, a server device includes one or more processors. The one or more processors are configured to identify a home mobile network of a user equipment that attempts to roam in a visited mobile network including the server device, determine, based on preconfigured information in the server device, that the home mobile network is a legacy network of the visited mobile network; retrieve, from a home subscriber service in the home mobile network, subscriber information for the user equipment, and configure a roaming connection for the user equipment in the visiting mobile network.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: illustrates several non-standalone options for deploying 5G NR with 4G LTE.
- Figure 2: illustrates a standalone option for deploying 5G NR.
- Figure 3: illustrates roaming between a 5GC VPLMN and 5GC HPLMN.
- Figure 4: illustrates a network diagram showing inter-core network roaming between a 5GC VPLMN and an EPC HPLMN.
- Figure 5: illustrates a general message sequence chart for an AMF to discover EPC NFs with an NRF.
- Figure 6: illustrates a message sequence chart for inter-core network roaming where an AMF discovers an EPC HSS, requests subscriber information for a visiting UE from the HSS, and attaches the visiting UE for a roaming connection.
- Figure 7: illustrates a message sequence chart for inter-core network roaming where an AMF redirects a visiting UE to another AMF that can configure an inter-core network roaming connection for the visiting UE.
- Figure 8: illustrates a message sequence chart for inter-core network roaming where an AMF rejects a visiting UE's attach (Registration) request and redirects the visiting UE to the VPLMN EPC.
- Figure 9: illustrates a message sequence chart where an AMF discovers an EPC HSS with an SCP.
- Figure 10: illustrates an internal configuration of an AMF.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

The 3GPP has proposed several options for mobile network operators to deploy 5G technologies. Because many such operators have existing 3GPP 4G networks, they have already deployed 4G core networks (Evolved Packet Core (EPC)) and 4G radio access network (e.g., LTE) components. Thus, several of the 3GPP's options deploy a 5G NR radio access network by integrating it with 4G technology. Since these options integrate 5G NR and 4G, they are known as 'non-standalone' options.

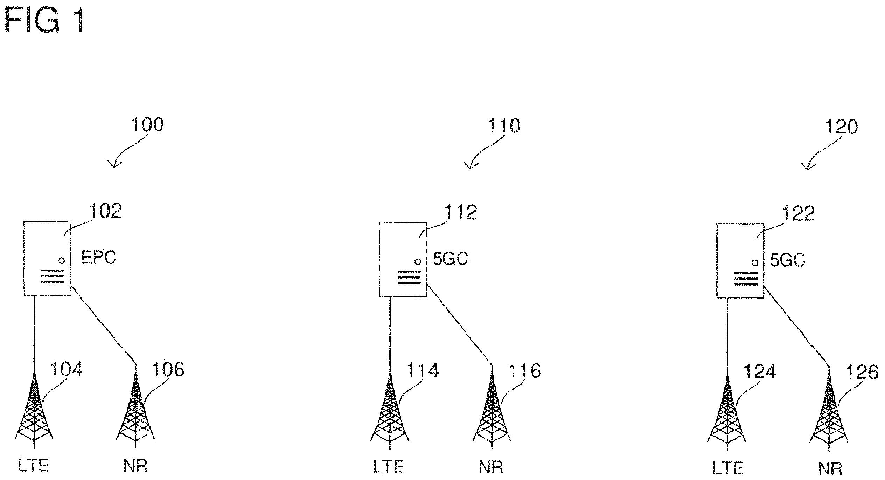

FIG. **1** several of these non-standalone options according to some aspects. In deployment option **100,** an LTE core network (EPC) **102** may serve as the core for an LTE radio access network **104** and an NR radio access network **106.** In deployment option **110,** a 5G core network (5GC) **112** may serve as the core for an LTE radio access network **104** and an NR radio access network **116** where the NR radio access network **116** acts as the master and LTE radio access network **104** acts as the secondary. In deployment option **120,** a 5G core network (5GC) **122** may serve as the core network for an LTE radio access network **124** and an NR radio access network **126,** where LTE radio access network **124** acts as the master and NR radio access network **126** acts as the secondary.

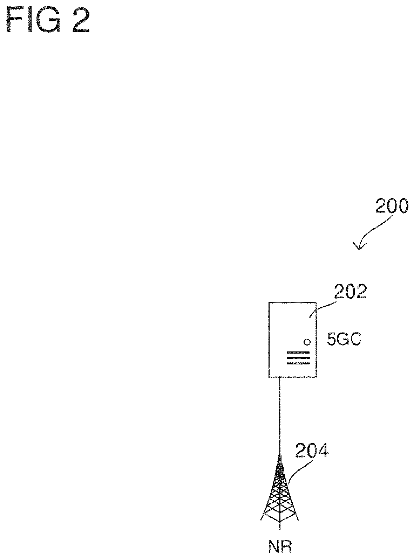

Mobile network operators may therefore have several options for deploying NR radio access networks alongside their existing LTE infrastructure as they transition from 4G to 5G. In addition to these non-standalone deployment options, the 3GPP has also proposed a standalone 5G deployment option. FIG. **2** shows an example according to some aspects. Here, deployment option **200** may deploy an NR radio access network **204** with a 5GC core network **202.** There may not be any integration between LTE and NR in deployment option **200.**

Though these different deployment options provide flexibility to mobile network operators, they may also lead to complications.

For example, some deployment options may lead to problems for procedures like roaming. In traditional roaming, a UE with a certain home mobile network (termed home public land mobile network (HPLMN)) may connect to a visited mobile network (termed visited public land mobile network (VPLMN)). The visited mobile network may then query the HPLMN network for the UE's subscriber information and, after authenticating the UE, provide the UE with a network connection. With roaming, UEs may still have connectivity even when their home mobile networks are not available.

In 3GPP 4G roaming, the EPC of the visited mobile network may query the EPC of the home mobile network to retrieve the UE's subscriber information. This query uses the legacy 4G EPC interfaces, many of which use Diameter messaging protocol. For example, the mobility management entity (MME) in the visited mobile network may request the UE's subscriber information from the home subscriber service (HSS) in the home mobile network using the S6a interface. That S6a interface is one of several Diameter interfaces that the 3GPP has defined for EPC nodes to communicate with each other.

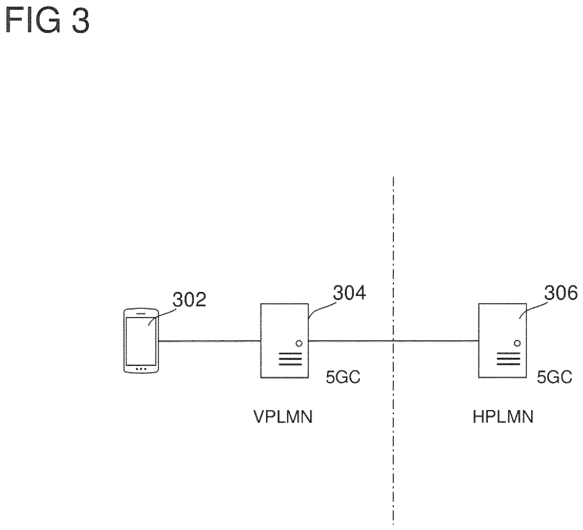

The 3GPP has also provided support for roaming between 5GC home and visited mobile networks. That support, however, is limited. For example, the 3GPP Release 15 and Release 16 standards only support roaming for 5GC inbound roaming users, meaning that a 5G UE with a 5GC home mobile network can roam on a 5GC visited mobile network. FIG. **3** shows an example of this 5GC inbound roaming according to some aspects. As shown in FIG. **3****,** a visiting UE **302** may attach to a visited 5GC core network **304** (5GC of a visited mobile network). Using the 3GPP's proposal, visited 5GC core network **304** may interface with visiting UE **302's** home 5GC core network **306.** Visited 5GC core network **304** may use this interface(s) to retrieve the subscriber information for visiting UE **302** and then configure a roaming connection for visiting UE **302.** The interface(s) between visited 5GC core network **304** and home 5GC core network **306** may use the 3GPP 5G service based interface (SBI), which is a Hypertext Transfer Protocol (HTTP)-based interface(s).

While the 3GPP has provided a mechanism for UEs with 5GC home mobile networks to roam on 5GC visited mobile networks, the 3GPP standard has not specified an architecture for UEs with home EPC core networks to roam on visited 5GC core networks. For example, referring back to the 5G deployment options in FIG. **1****,** a visiting UE whose home mobile network operator uses deployment option **100** may not be able to roam on a mobile network that only has a 5GC core network (e.g., FIG. **1's** deployment option **110** or FIG. **2's** deployment option **200** in the visited mobile network).

This disclosure therefore provides mechanisms for inter-core network roaming. These mechanisms include an inter-core interfere architecture as well as procedures for the visited core network to identify a visiting UE's home mobile network, retrieve its subscriber information, and configure an appropriate roaming connection for the visiting UE. With this mechanism, UEs with home EPC core networks (e.g., EPC-only) may be able to roam on visited 5GC core networks. Users may therefore be able to enjoy 5G's superior bandwidth and flexibility even when roaming outside of their own home mobile networks.

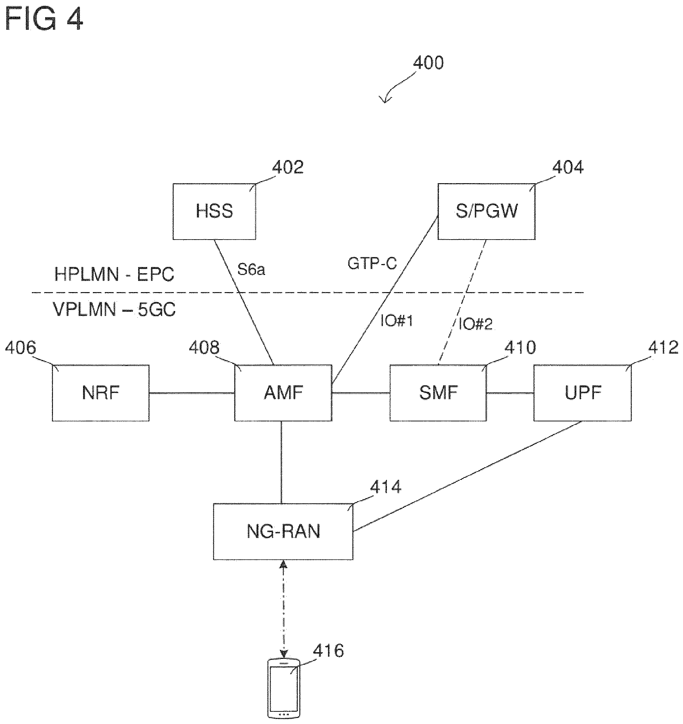

FIG. **4** shows exemplary network architecture **400** according to some aspects. As shown in FIG. **4****,** visiting UE **416** may connect to the NR radio access network (NG-RAN) of a visited mobile network. The visited mobile network may have a 5GC core network, referred to herein as a visited 5GC core network. In some aspects, the 5GC core network may have only 5GC components, and no EPC components. As Fig. **4** shows, the visited 5GC core network may include 5GC network functions (NF) **406-412.** NFs **406-412** may be core network nodes standardized by the 3GPP. For example, 3GPP TS 23.501 (Release 15/16) defines network repository function (NRF) **406** as a core network node that provides service registration and discovery services. Different NFs may query NRF **406** for NF services so they can discover each other. NRF **406** may therefore store NF profiles that it may provide in response to queries. The NF profiles may either be configured by the O&M system or NFs (**408-412**) itself registered with its NF profile with the NRF.

Access and management function (AMF) **408** may provide mobility management and access control for the 5GC core network. This may include registering an authenticating attached UEs, handling non-access stratum (NAS) signalling, and performing mobility management mobility management.

Session management function (SMF) **410** may handle session management for UEs connected to the 5GC core network. This may include managing protocol data unit (PDU) sessions and overseeing sessions with user plane function (UPF) **412.**

UPF **412** may manage user-plane traffic flow between UEs and data networks (DNs). This may include packet routing and forwarding and Quality of Service (QoS) control.

Visiting UE **416** may have a home mobile network that uses an EPC core network (home EPC core network). As shown in FIG. **4****,** the home EPC core network may include at least home subscriber service (HSS) **402** and Serving/Packet Gateway (S/PGW) **404.** Home subscriber service (HSS) may be an EPC node that stores the subscriber information for subscribers of the home mobile network. S/PGW **404** may be an EPC node that interfaces between the home mobile network and external packet data networks (PDNs) and route user-plane data to and from the home mobile network for its served UEs.

Because the home mobile network only deploys an EPC core network (e.g., as in deployment option **100** from FIG. **1**), visited 5GC core network may not be able to use an existing 3GPP mechanism to configure a roaming connection for visiting UE **416.** According to aspects of this disclosure, AMF **408** may therefore determine that visiting UE **416's** home mobile network is EPC-only and then use an S6a (Diameter) interface to retrieve UE **416's** subscriber information from HSS **402** in the home EPC core network. AMF **408** may then configure a roaming connection for visiting UE **416,** such as a home routing (HR) roaming connection via the home EPC core network or a local breakout (LBO) roaming connection via the visited 5GC core network. In this way, visiting UE **416** may be able to roam on the visited 5GC core network even though its own home mobile network is EPC-only.

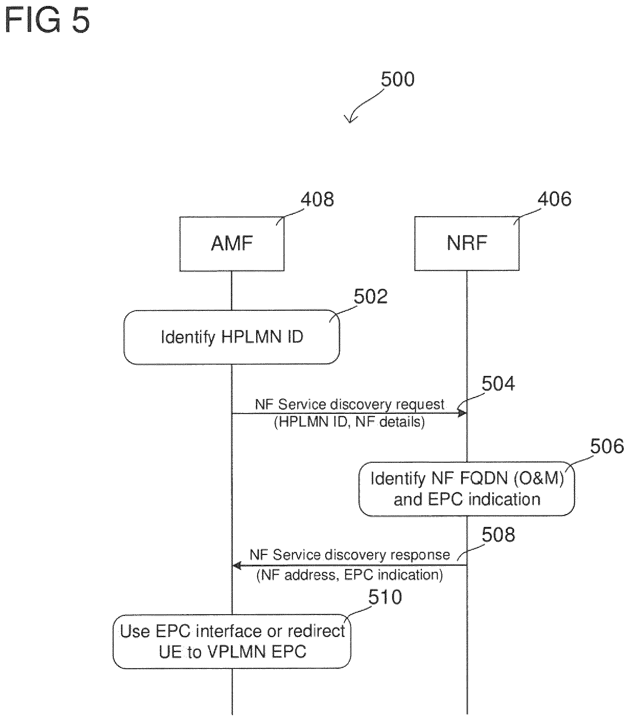

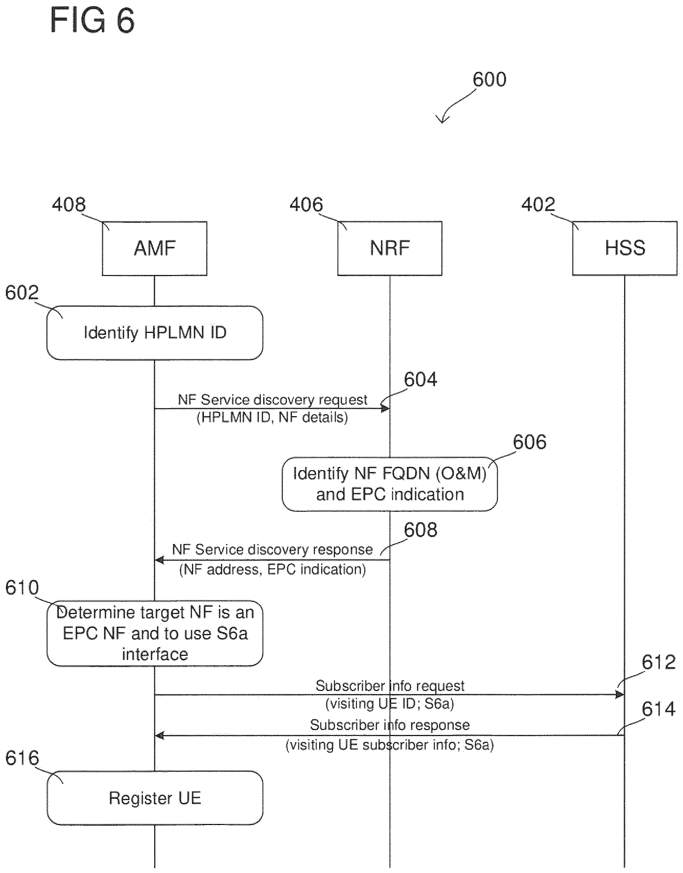

FIG. **5** shows exemplary message sequence chart **500** according to some aspects. Message sequence chart **500** describes a general procedure with which AMF **408** can discover and communicate with EPC NFs using NRF **406.** This includes when AMF **408** communicates with, for example, HSS **402** in the home EPC core network. That example is described in greater detail in FIG. **6****.**

AMF **408** may initially start with a target NF that it wants to discover and communicate with. In this example, AMF **408** may not initially know whether the target NF is an EPC NF (e.g., any node in the EPC of another mobile network). As shown in FIG. **5****,** when attempting to communicate with a target NF, AMF **408** may first identify the HPMLN ID (ID for the home mobile network) of the target NF in stage **502.** In one example, a visiting UE sends the HPLMN ID in the connection request (e.g. in Registration Request message) to AMF **408** in visited mobile network.

After identifying the HPLMN ID, AMF **408** may generate and send an NF service discovery request to NRF **406** in stage **504.** With that NF service discovery request, AMF **408** may request information on the NF service, e.g., request information on the target NF. AMF **408** may include in the NF service discovery request the HPLMN ID and details on the target NF.

NRF **406** may receive and process the NF Service discovery request, thus identifying the HPLMN ID and NF details. NRF **406** may then, in stage **506,** identify the address of the target NF and determine whether the target NF is an EPC component (an EPC indication). In some aspects, the address of the target NF may be a fully qualified domain name (FQDN). In some aspects, the operations and maintenance (O&M) system may have previously configured the FQDN and the EPC indication, and NRF **406** may perform stage **506** by referencing this preconfigured information. The EPC indication can be an explicit indication or implicit. For example, NRF **406** may provide the EPC indication in the form of an NF address (e.g., one or more bit(s) reserved in the NF address which identifies it is an EPC function or dedicated address(es) are reserved for the EPC function(s), which can identify the EPC function).

NRF **406** may then generate and send an NF Service discovery response in stage **508.** NRF **406** may include the NF address (e.g., FQDN) and the EPC indication in the NF Service discovery response.

AMF **408** may receive and process the NF Service discovery response to identify the NF address with an EPC indication. Based on the EPC indication, AMF **408** may determine that the target NF is an EPC NF.

Alternatively, the AMF **408** may first identify the HPMLN ID (ID for the home mobile network) of the target NF in stage **502.** Based on configuration in the AMF (e.g. local policy configured in the AMF), the AMF **408** determine that UE's home mobile network is an EPC network. For example, operations and maintenance (O&M) system may have previously configured the PLMN ID and the EPC indication in tAMF **408,** e.g., preconfigured information specifying that HPLMN ID#1 is an EPC network and HPLMN ID#2 is an 5GC network, etc. Based on options, it is also possible that even if AMF **408** determines the home mobile network is an EPC network, AMF **408** will still FIG. **5's** procedure to identify the NF address. In this case, the AMF may include an explicit EPC indication in the NF Service discovery request of stage **504,** and NRF **406** may determine that the requested NF is an EPC NF based on that explicit EPC indication..

AMF **408** may have several different options once it identifies the target NF is an EPC NF. For example, if the AMF **408** supports an EPC interface with the target NF in its EPC core network, AMF **408** may use the EPC interface to communicate with the target NF. In one example, AMF **408** may use the EPC interface to retrieve subscriber information from a target HSS in a visiting UE's home mobile network.

In other examples, such as where AMF **408** does not support an EPC interface with the target NF, AMF **408** may redirect the visiting UE to use the visited mobile network's EPC. For instance, the visited mobile network may include both a 5GC and an EPC, an the visiting UE may be able to use the visited mobile network's EPC.

FIG. **5** therefore explains the general EPC NF discovery and selection for AMF **408.** FIGs. **6-8** show exemplary message sequence charts specifically for inter-core network roaming according to some aspects. In these examples, the home mobile network may be a legacy network to the visited mobile network, such as a 4G network that is legacy to a 5G network. The home mobile network may therefore include a legacy core network (EPC vs. 5GC) which uses a legacy interface (e.g., based on the Diameter and other legacy protocol).

Since the home mobile network is a legacy network, the visited mobile network may use various aspects of this disclosure to provide inter-core network roaming to visiting UE **416.** Starting with FIG. **6****,** exemplary message sequence chart **600** shows an example where AMF **408** acts like an EPC MME to configure a roaming connection for a visiting UE. As FIG. **6** shows, AMF **408** may first identify the HPLMN ID for visiting UE **416** in stage **602.** For example, visiting UE **416** may connect to NG-RAN **414** (the NR radio access network) of the visited mobile network. Visiting UE **416** may then attempt to attach to the visited mobile network, which may include sending control signalling (e.g., a Registration request) to AMF **408** that includes its HPLMN ID.

After receiving the HPLMN ID, AMF **408** may attempt to retrieve the subscriber information for visiting UE **408.** Like described for the general EPC NF communication procedure in FIG. **5****,** AMF **408** may not initially know that visiting UE **416's** home mobile network is EPC-only. AMF **408** may use the same general procedure outlined in FIG. **5** to request NF service discovery from NRF **406.** Specifically, AMF **408** may first send an NF Service discovery request to NRF **406** in stage **604.** Specifically, AMF **408** may include the HPLMN ID and NF details of the target NF in the NF discovery request.

NRF **406** may receive the NF Service discovery request and identify the address (e.g., FQDN) of the target NF. NRF **406** may also determine, based on the HPLMN ID and the NF details, that the target NF is an EPC NF. For example, NRF **406** may determine that the target NF is HSS **402** in the EPC of the home mobile network. This information may be preconfigured in NRF **406** by O&M.

NRF **406** may then generate and send an NF service discovery response to AMF **408** in stage **608.** The NF service discovery response may include the target NF's address and an EPC indication specifying that the target NF is an HSS.

Based on the NF service discovery response, AMF **408** may determine that the target NF is an EPC NF, and that it is an HSS, i.e., HSS **402.** In this example, AMF **408** may be configured to use a legacy interface to communicate with HSS **402.** For example, AMF **408** may be configured to communicate with HSS(s) with an S6a interface (e.g., Diameter). AMF **408** may thus determine to use the S6a interface in stage **610** of this example.

AMF **608** may then use the S6a interface to request visiting UE **416's** subscriber information from HSS **402.** As FIG. **6** shows, AMF **608** may generate and send a subscriber information request to HSS **402** with the S6a interface in stage **612.** The subscriber information request may include visiting UE **416's** ID.

HSS **402** may receive the subscriber information request and retrieve the subscriber information for visiting UE **416.** HSS **402** may then generate and send a subscriber information response in stage **616.** The subscriber information response may include visiting UE **416's** subscriber information.

AMF **408** may receive the subscriber information request and then perform an attach procedure for visiting UE **416** in stage **416.** For example, AMF **408** may act as an MME and perform 3GPP the attach procedure specified in 3GPP TS 23.401, clause 5.3.2.1, step 5a. AMF **408** may then configure the inter-core network roaming connection for visiting UE **416,** described in detail later.

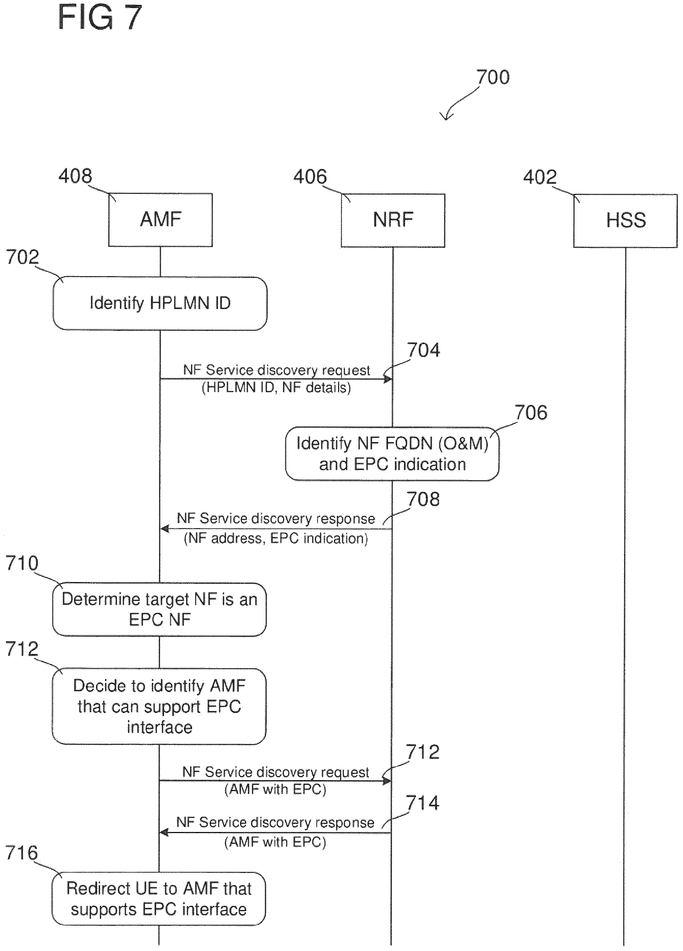

FIG. **7** shows another example of inter-core network roaming according to some aspects. In message sequence chart **700**, AMF **408** may not support an EPC interface with HSS **402,** and thus may not be able to request visiting UE's subscriber information over the S6a interface.

As message sequence chart **700** shows, AMF **408** and NRF **406** may perform stages **702-708** in the same manner as stages **602-608** from message sequence chart **600** in FIG. **6****.** However, in this example AMF **408** may determine in stage **710** that the target NF is HSS **402** (an EPC NF) and that AMF **408** does not support an EPC interface with EPC NFs. AMF **408** may therefore not be able to retrieve visiting UE **416's** subscriber information from HSS **402.**

Accordingly, in stage **712** AMF **408** may decide to identify an AMF that can support the EPC interface. In the example shown in FIG. **7****,** AMF **408** may generate and send an NF Service discovery request in stage **714** that requests an NF service for an AMF that supports EPC interfaces. NRF **406** may respond in stage **716** with an NF Service discovery response that identifies such an AMF. In another example, AMF **408** may request the identify of an AMF that supports EPC interfaces from the Network Slice Selection Function (NSSF; not explicitly shown in FIG. **4**) of the visited mobile network. In these cases, AMF **408** may explicitly specify (indicate) that is requesting another AMF that supports EPC interfaces.

In any case, AMF **408** may identify another AMF that supports an S6a interface with HSS **402.** AMF **408** may then redirect visiting UE **416** to that AMF in stage **716.** For example, AMF **408** may send to visiting UE **416** control signalling that redirects visiting UE **416** to the other AMF. Alternatively, AMF **408 may** redirect visiting **UE 416** within the network (e.g., via signalling with NG-RAN **414** or communication signalling between AMFs) without visiting UE **416** knowing that it has been redirected to the other AMF.

The other AMF may then, for example, either obtain visiting UE **416's** subscription information from HSS **402** or reject visiting UE **416's** registration request. In an example where the other AMF obtains the subscription information from HSS **402,** the other AMF may perform stages **602-616** of message sequence chart **600** in FIG. **6****.** By doing so, the other AMF may obtain visiting UE's subscription information from HSS **402,** complete visiting UE **416's** registration request, and configure an inter-core network roaming connection for visiting UE **416.**

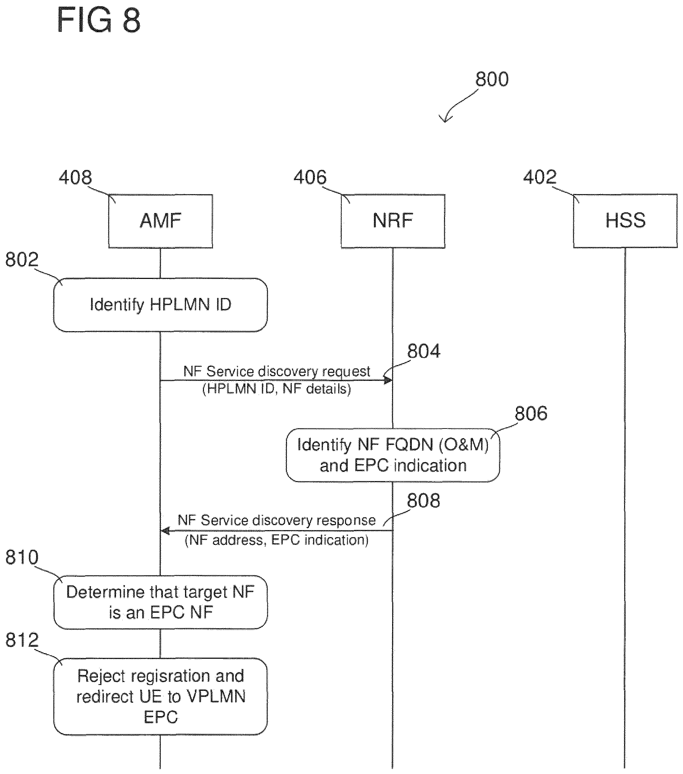

In the case where the other AMF rejects visiting UE **416's** registration request, the other AMF may redirect the visiting UE to the visiting mobile network's EPC. That procedure is described below in stage **812** of message sequence chart **800** of FIG. **8****.**

FIG. **8** shows exemplary message sequence chart **800** according to some aspects. Like message sequence chart **700** in FIG. **7****,** message sequence chart **800** covers an example where AMF **408** does not support EPC interfaces. For example, instead of redirecting visiting UE **416** to another AMF, AMF **408** may reject visiting UE **416's** registration request and then redirect visiting UE **416** to the visited mobile network's EPC.

As FIG. **8** shows, AMF **408** and NRF **406** may perform stages **802-810** in the same manner as stages **602-610** of FIG. **6's** message sequence chart **600.** AMF **408** may therefore determine that the target NF is an EPC NF in stage **810.** Because AMF **408** does not support EPC interfaces, in stage **812** AMF **408** may reject visiting UE **416's** registration request and redirect visiting UE **416** to the visited mobile network's EPC. AMF **408** may include an explicit indication in the rejection to visiting UE **416** to perform an attach procedure with an EPC in the visited mobile network. Thus, visiting UE **416** may not be able to attach the 5GC, and may not be able to use NG-RAN **414.** Visiting UE **416** may instead attempt to attach to the visited mobile network's EPC, where it may use the 4G radio access network (e.g. E-UTRAN).

In some aspects, AMF **408** may be configured either to accept visiting UE **416's** registration request or to redirect it based on operator policy. For example, AMF **408** may be preconfigured with operator policy that allows inter-core network roaming (where AMF **408** would use the procedure of message sequence chart **600** or **700**) or with operator policy that forbids inter-core network roaming (where AMF **408** would use the procedure of message sequence chart **800**). Thus, after receiving the NF service response from NRF **406** and/or determining that the target NF is an EPC NF, AMF **408** may determine whether to accept visiting UE **416's** registration request based on the preconfigured operator policy.

In some aspects, visiting UE **416's** home mobile network may allow or forbid UEs from performing inter-core network roaming. For example, HSS **402** may be preconfigured with these permissions. When AMF **408** (or another AMF, like in FIG. **7**) requests visiting UE **416's** subscriber information, HSS **402** may explicitly indicate in the subscriber information response that visiting UE **416** can or cannot perform inter-core network roaming e.g., with 5GC. AMF **408** may then decide whether to accept or reject and/or redirect to visiting EPC of visiting UE **416's** registration request based on that explicit indication. For example, if the subscriber information response in **614** allows inter-core network roaming (e.g., allows visiting UE **416** to attach to 5GC mobile networks), AMF **408** may allow visiting UE **416's** registration request. Conversely, if the subscriber information response in **614** forbids inter-core network roaming (e.g., allows visiting UE **416** to attach to 5GC mobile networks), AMF **408** may reject the registration request and/or redirect to the EPC in the visiting network.

In some aspects, once AMF **408** determines that a particular home mobile network (by HPLMN ID) supports EPC, AMF **408** may specify that information in later NF Service discovery requests. For example, AMF **408** may send an NF Service discovery request for the HPLMN ID of visiting UE **416's** home mobile network, and the response from NRF **406** may specify that the home mobile network supports EPC. Then, if AMF **408** requests from NRF **406** an NF for that same HPLMN ID (e.g., for SGW or PGW selection in that home mobile network), AMF **408** may send an explicit request saying that it wants to discover an NF in the home mobile network and an express indication that it is requesting an EPC NF.

Accordingly, some examples in FIGs. **6-8** may provide inter-core network roaming for visiting UE **416,** while other may reject visiting UE's 5GC registration request. If AMF **408** (or equivalently the other AMF from FIG. **7**) accepts visiting UE **416's** registration request, AMF **408** may configure a roaming connection for visiting UE **416.** In some aspects, AMF **408** may configure the roaming connection as a home routing (HR) roaming connection, while in other aspects AMF **408** may configure the roaming connection as a local breakout (LBO) roaming connection. In some aspects, AMF **408** may decide whether to use HR or LBO e.g. based on visiting UE **416's** subscription information.

This disclosure will use FIG. **4** to explain the HR and LBO roaming connection options. For HR roaming, the visited mobile network may route visiting UE **416's** user data to and from visiting UE **416** via the home mobile network's EPC. For example, the visited mobile network may tunnel IP packets to and from visiting UE **416** and the internet via visiting UE **416's** home mobile network.

In one HR roaming example using FIG. **4****,** AMF **408** then use a tunnelling interface with S/PGW **404** to route user data to and from visiting UE **416.** That option is identified with identifier "IO#1" in FIG. **4****.** For example, AMF **408** may use an S11/S5-C interface with S/PGW **404** and establish S5-U to route data packets between S/PGW **404** and visiting UE **416** (via NG-RAN **414**). S/PGW **404** may provide access to external networks like the Internet, thus providing an HR roaming connection to visiting UE **416.** Since 3GPP has already standardized GPRS Tunnelling Protocol Control (GTP-C) protocol support for AMFs (for connected mode mobility from 5GC to EPC; 3GPP TS 23.501 and TS 23.502), AMF **408** may use GTP-C to exchange data with S/PGW **404** on the Sll/S5-C interface. AMF **408** may configure this HR roaming connection by establishing a connection with S/PGW **404** over this interface.

In another HR roaming example using FIG. **4****,** SMF **410** may act like a Serving Gateway (SGW) and interface with S/PGW **404.** That option is identified with identifier "IO#2" in FIG. **4****.** AMF **408** may configure the HR roaming connection by establishing routing link between visiting UE **416** and S/PGW **404.** In the uplink direction, UPF **412** may receive visiting UE **416's** user-pane packets (via NG-RAN **414,** e.g. over an N3 interface) and forward them to S/PGW **404.** UPF **412** may provide this forwarding with, for example, GTP-U tunnelling protocols over an S5-U interface with S/PGW **404.** S/PGW **404** may then send these user-plane packets to external networks like the Internet. In the downlink direction, S/PGW **404** may receive user-plane packets from external networks and send them to UPF **412** (using the reverse link of the same interfaces). UPF **412** may then send the user-plane packets to visiting UE **416** (via NG-RAN **414**). Control plane communication may then take place between AMF **408,** SMF **410,** and UPF **412.** S/PGW **404** may perform both control and user plane functions (e.g., combined into one box).

AMF **408** may alternatively configure an LBO roaming connection for visiting UE **416.** For LBO roaming, the visited mobile network may directly provide an external data connection to visiting UE **416** (e.g., without routing user-plane packets first to visiting UE **416's** home mobile network). For example, UPF **412** may provide a connection to external data networks for visiting UE **416,** and may route user-plane packets to and from visiting UE **416** on the path between (NG-RAN **414**)**-** (UPF **412**)**.** AMF **408** may configure this LBO roaming connection by setting up NG-RAN **414** and UPF **412** to do this user-plane packet routing. The user-plane routing will be between NG-RAN **414** to UPF **412** to the internet, and the control plane routing will be between NG-RAN **414,** AMF **408,** SMF **410,** and UPF **412.**

In the examples of FIGs. **6-8** above, this disclosure explained that AMF **408** may discover HSS **402** (or other EPC NFs) by communicating with NRF **406.** Other aspects may handle this subscriber information retrieval in different manners. For example, in some aspects AMF **408** may be preconfigured with the HSS information (e.g., via O&M), and may know in advance that certain mobile networks (by PLMN ID) are EPC. Thus, when AMF **408** identifies the HPLMN ID for visiting UE **416,** AMF **408** may determine that the target NF is an EPC NF (e.g., an HSS) based on the preconfigured HSS information. AMF **408** may therefore directly decide to use an S6a interface (Diameter) to communicate with HSS **402** to retrieve visiting UE **416's** subscriber information. Thus, in this example AMF **408** may not need to exchange NF service discovery requests and responses with NRF **406** to determine that the target NF is an EPC NF.

In another example, AMF **408** may still use NRF **406** to determine that the target NF is an EPC NF and that AMF **408** should use the S6a interface. However, instead of sending Diameter messages directly to HSS **402,** AMF **408** may send the Diameter messages to a Service Communication Proxy (SCP; also known as the Delegated Discovery function). The SCP may then forward the message to HSS **402** on behalf of AMF **408** (e.g., forward a subscriber information request). The SCP may similarly forward messages from HSS **402** to AMF **408** (e.g., forward a subscriber information response). The general procedure for stages **610-616** in message sequence chart **600** will remain the same except for the SCP sitting between AMF **408** and HSS **402.**

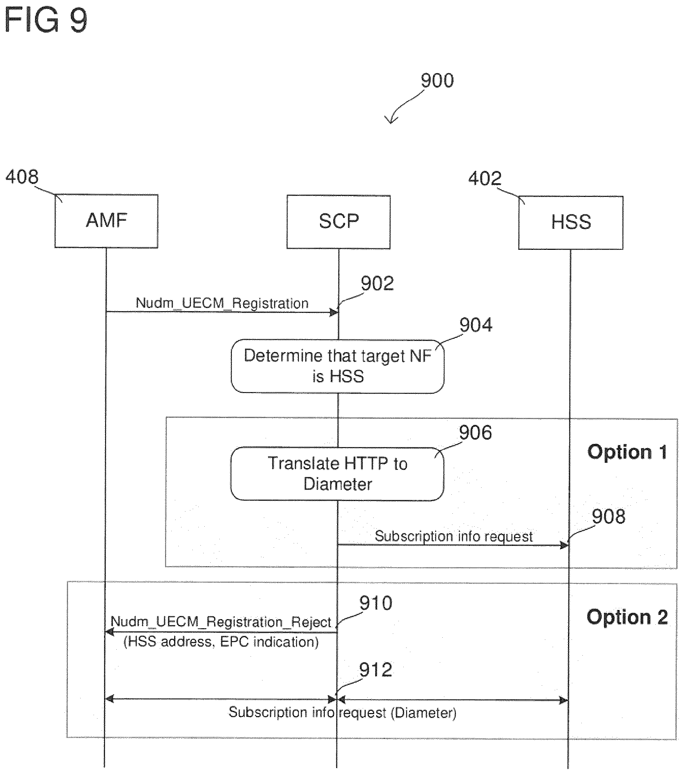

FIG. **9** shows another example for how AMF **408** can discover HSS **402** according to some aspects. Message sequence chart **900** shows two options of this. Like in the previous examples, AMF **408** may not initially know whether visiting UE **416's** home mobile network has an EPC or 5GC core network. By default, AMF **408** may send a 5GC message to the SCP (e.g., *Nudm*_*UECM*_*Registration*) in stage **902.**

The SCP may then determine that the target NF is an EPC NF (specifically, HSS) in stage **904.** In some aspects, the SCP may be preconfigured (via O&M) with information identifying the HPLMN ID as an EPC. In other aspects, the SCP may query NRF **406** with an NF Service discovery request that requests information about the target NF (e.g., as in stages **504-508**). The NF Service discovery response may then identify that the target NF is an HSS.

In the first option ("Option 1"), the SCP may translate the HTTP message to Diameter in stage **906.** The SCP may then send a subscription information request (Diameter) to HSS **402** in stage **908** and response received from HSS **402** (in Diameter) is sent to AMF **408** (in HTTP messages). For example, in this case, the SCP seen by HSS **402** as a MME function and UDM as an AMF function. The protocol translation component (e.g., translation Diameter to HTTP (vice versa) or GTP to HTTP (vice versa) can be part of the SCP or can be outside of the SCP. If it is outside the SCP, then sends all the HTTP message to this component and this component translate to respective protocol and sends to the target NF directly or indirectly (via SCP).

In the second option ("Option 2"), the SCP may reject AMF **408's** request in stage **910** (*Nudm*_*UECM*_*Registration*_*Reject*). Along with that rejection, the SCP may include HSS **402's** address (e.g., FQDN) and an EPC indication specifying that the target NF is an EPC NF).

AMF **408** may thus determine that the target NF is an EPC NF based on the information in the rejection. AMF **408** may therefore decide to use Diameter messages to request and receive the subscription information for visiting UE **418.** AMF **408** may generate and send a subscription information request (Diameter) in stage **912.** In some aspects, AMF **408** may send the subscription information request directly to HSS **402.** In other aspects, AMF **408** may send the subscription information to the SCP, which may forward the subscription information request to HSS **402.** HSS **402** may respond by sending back the subscription information for visiting UE **418,** either directly to AMF **408** or by routing it via the SCP.

With the aspects described above, a 5GC core network may support inter-core network roaming for visiting UEs whose home mobile networks only support EPC. Visiting UEs may therefore be able to use the visited mobile network's NR radio access network, thus enjoying higher data speeds and more flexibility.

In some aspects, the network functions(e.g., EPC and 5GC NFs/Services) described in this disclosure may be structurally configured like servers. For example, one or more of network functions **402-412** may include one or more processors configured to execute program code that defines its respective operations as described above. These one or more processors may retrieve that program code from a memory. In some aspects, one or more of network functions **402-412** may be implemented on a single processor or a co-located set of processors. In other aspects, one or more of network functions **402-412** may be implemented virtually, and may be executed across multiple separate processors using network function virtualization. From future perspective and could native design, some NFs may have one or more services. These services can run and manage independently in virtual or physical networks. It is therefore possible that there will no longer be NF concepts, but only network services (e.g., like IT companies). Aspects of this disclosure may also be implemented as software this manner. In some aspects, network functions **402-412** may include, or be executed on, one or more processors that work together with hardware logic circuitry (e.g., any type of specialized hardware, such as an application specific integrated circuit (ASIC)) to perform processing functions.

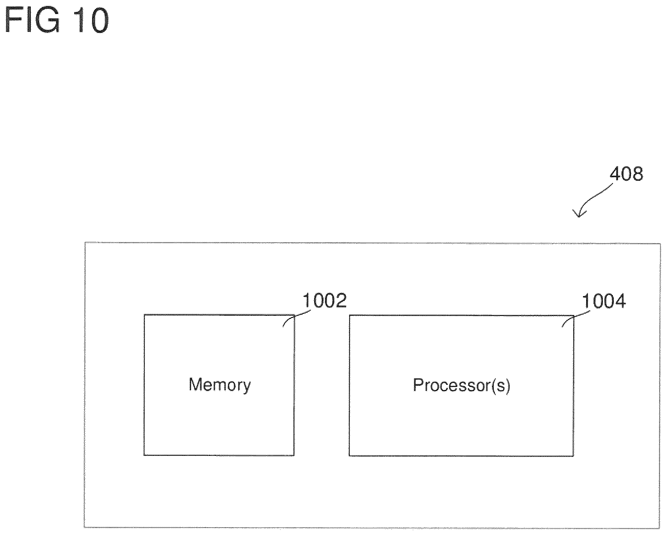

FIG. **10** shows an exemplary internal configuration of AMF **408.** As shown in FIG. **10****,** AMF **408** may include memory **1002** and one or more processors **1004.** Memory **1002** may store program code that one or more processors **1004** retrieve and execute. When one or more processors **1004** execute that program code, one or more processors **1004** may perform the operations of AMF **408** according to any aspect described herein. In some aspects, AMF **408** may be implemented virtually, such as where memory **1002** and/or one or more processors **1004** are split into different physical locations and operated using network virtualization.

While this disclosure has described specific aspects, it should be understood by those skilled in the art that various changes in form and detail may be made therein without departing from the scope of the aspects of this disclosure as defined by the appended claims. The scope is thus indicated by the appended claims and all changes which come within the meaning of the claims are therefore intended to be embraced.

## Claims

1. A server device (408) comprising one or more processors configured to:
Identify (502, 702) a home mobile network of a user equipment that attempts to roam in a visited mobile network comprising the server device;
determine (710), based on preconfigured information in the server device, that the home mobile network is a legacy network of the visited mobile network; and retrieve (714), from a home subscriber service in the home mobile network, subscriber information for the user equipment; and
configure (510, 716) a roaming connection for the user equipment in the visiting mobile network.

2. The server device of claim 1, wherein the one or more processors are configured to retrieve the subscriber information by:
sending, on a legacy interface, a subscriber information request to the home subscriber service; and
receiving, on the legacy interface, the subscriber information,
wherein preferably the legacy interface is an S6a interface that uses a Diameter protocol.

3. The server device of claim 1 or 2, wherein the one or more processors are configured to configure the roaming connection for the user equipment by:
establishing a home routing roaming connection for the user equipment with a packet gateway of the home mobile network, a radio access network of the visited mobile network, and a user-plane function of the visited mobile network, or
wherein the one or more processors are configured to configure the roaming connection for the user equipment by:
establishing a local breakout roaming connection for the user equipment with a radio access network of the visited mobile network, and a user-plane function of the visited mobile network.

4. The server device of any one of claims 1 or 3, wherein the one or more processors are further configured to:
determine (810) that the server device does not support a legacy interface with the home subscriber service; and
reject the user equipment and/or redirect (812) the user equipment to a second server device in the visited mobile network or to a legacy core network of the visited mobile network.

5. The server device of claim 4, wherein server device is an access and mobility management function of the visited mobile network and wherein the second server device is a second access and mobility management function of the visited mobile network that supports a legacy interface with the home subscriber service.

6. The server device of any one of claims 1 to 5, wherein the one or more processors are configured to determine (710), based on preconfigured information in the server device, that the home mobile network is a legacy network of the visited mobile network by:
referencing preconfigured information in the server device that identifies the home subscriber service as a component of the home mobile network.

7. A method of handling roaming requests at a server device, the method comprising:
identifying (502) a home mobile network of a user equipment that attempts to roam in a visited mobile network comprising the server device;
determining (710), based on preconfigured information in the server device, that the home mobile network is a legacy network of the visited mobile network; and retrieving (714), from a home subscriber service in the home mobile network, subscriber information for the user equipment; and
configuring (510, 716) a roaming connection for the user equipment in the visiting mobile network.

8. The method of claim 7, wherein retrieving the subscriber information from the home subscriber service comprises:
sending, on a legacy interface, a subscriber information request to the home subscriber service; and
receiving, on the legacy interface, the subscriber information.

9. The method of claim 7 or 8, wherein configuring the roaming connection for the user equipment comprises:
establishing a home routing roaming connection for the user equipment with a packet gateway of the home mobile network, a radio access network of the visited mobile network, and a user-plane function of the visited mobile network.

10. The method of any one of claims 7 or 9, further comprising:
determining (810) that the server device does not support a legacy interface with the home subscriber service; and
rejecting the user equipment and/or redirecting (812) the user equipment to a second server device in the visited mobile network or to a legacy core network of the visited mobile network.

11. A computer readable medium storing instructions that, when executed by one or more processors of a server device, cause the server device to perform the steps of the method of any one of claims 7 to 10.

## Patentansprüche

1. Eine Servervorrichtung (408) aufweisend einen oder mehrere Prozessoren, die eingerichtet sind zum:
Identifizieren (502, 702) eines Heim-Mobilfunknetzwerkes eines Benutzergerätes, das versucht, in einem besuchten Mobilfunknetzwerk, welches die Servervorrichtung enthält, zu roamen;
Ermitteln (710), basierend auf vorkonfigurierten Informationen in der Servervorrichtung, dass das Heim-Mobilfunknetzwerk ein Legacy-Netzwerk des besuchten Mobilfunknetzwerkes ist; und Abrufen (714) von Teilnehmerinformationen für das Benutzergerät aus einem Heim-Teilnehmerdienst des Heim-Mobilfunknetzwerkes; und
Konfigurieren (510, 716) einer Roaming-Verbindung für das Benutzergerät in dem besuchten Mobilfunknetzwerk.

2. Die Servervorrichtung gemäß Anspruch 1, wobei die einen oder mehreren Prozessoren eingerichtet sind, die Teilnehmerinformationen abzurufen, indem sie:
über eine Legacy-Schnittstelle eine Anforderung von Teilnehmerinformationen an den Heim-Teilnehmerdienst senden; und
über die Legacy-Schnittstelle die Teilnehmerinformationen empfangen,
wobei die Legacy-Schnittstelle vorzugsweise eine S6a-Schnittstelle ist, die ein Diameter-Protokoll verwendet.

3. Die Servervorrichtung gemäß Anspruch 1 oder 2, wobei die einen oder mehreren Prozessoren eingerichtet sind, die Roaming-Verbindung für das Benutzergerät zu konfigurieren, indem entweder:
eine Heim-Routing-Roaming-Verbindung für das Benutzergerät mit einem Paket-Gateway des Heim-Mobilfunknetzwerkes, einem Funkzugangsnetzwerk des besuchten Mobilfunknetzwerkes und einer Benutzer-Ebene-Funktion des besuchten Mobilfunknetzwerkes aufgebaut wird, oder
eine lokale Breakout-Roaming-Verbindung für das Benutzergerät mit einem Funkzugangsnetzwerk des besuchten Mobilfunknetzwerkes und einer Benutzer-Ebene-Funktion des besuchten Mobilfunknetzwerkes aufgebaut wird.

4. Servervorrichtung gemäß einem der Ansprüche 1 oder 3,
wobei die einen oder mehreren Prozessoren ferner eingerichtet sind zum:
Ermitteln (810), dass die Servervorrichtung keine Legacy-Schnittstelle mit dem Heim-Teilnehmerdienst unterstützt; und
Ablehnen des Benutzergerätes und/oder Weiterleitung (812) des Benutzergerätes an eine zweite Servervorrichtung im besuchten Mobilfunknetzwerk oder an ein Legacy-Kernnetzwerk des besuchten Mobilfunknetzwerkes.

5. Die Servervorrichtung gemäß Anspruch 4, wobei die Servervorrichtung eine Zugangs- und Mobilitätsverwaltungsfunktion des besuchten Mobilfunknetzwerkes ist und wobei die zweite Servervorrichtung eine zweite Zugangs- und Mobilitätsverwaltungsfunktion des besuchten Mobilfunknetzwerkes ist, die eine Legacy-Schnittstelle mit dem Heim-Teilnehmerdienst unterstützt.

6. Servervorrichtung gemäß einem der Ansprüche 1 bis 5, wobei die einen oder mehreren Prozessoren eingerichtet sind zu ermitteln (710), auf der Grundlage von vorkonfigurierten Informationen in der Servervorrichtung, dass das Heim-Mobilfunknetzwerk ein Legacy-Netzwerk des besuchten Mobilfunknetzwerkes ist, indem sie:
auf vorkonfigurierte Informationen in der Servervorrichtung verweisen, die den Heim-Teilnehmerdienst als eine Komponente des Heim-Mobilfunknetzwerkes identifizieren.

7. Verfahren zur Bearbeitung von Roaming-Anfragen an einer Servervorrichtung, aufweisend:
Identifizieren (502) eines Heim-Mobilfunknetzwerkes eines Benutzergerätes, das versucht, in einem besuchten Mobilfunknetzwerk, welches die Servervorrichtung enthält, zu roamen;
Ermitteln (710), basierend auf vorkonfigurierten Informationen in der Servervorrichtung, dass das Heim-Mobilfunknetzwerk ein Legacy-Netzwerk des besuchten Mobilfunknetzwerkes ist; und Abrufen (714) von Teilnehmerinformationen für das Benutzergerät aus einem Heim-Teilnehmerdienst des Heim-Mobilfunknetzwerkes; und
Konfigurieren (510, 716) einer Roaming-Verbindung für das Benutzergerät in dem besuchten Mobilfunknetzwerk.

8. Verfahren gemäß Anspruch 7, wobei das Abrufen der Teilnehmerinformationen vom Heim-Teilnehmerdienst aufweist:
Senden einer Anforderung von Teilnehmerinformationen an den Heim-Teilnehmerdienst über eine Legacy-Schnittstelle; und
Empfangen der Teilnehmerinformationen über die Legacy-Schnittstelle.

9. Verfahren gemäß einem der Ansprüche 7 oder 8, wobei die Konfiguration der Roaming-Verbindung für das Benutzergerät aufweist:
Einrichten einer Heim-Routing-Roaming-Verbindung für das Benutzergerät mit einem Paket-Gateway des Heim-Mobilfunknetzwerkes, einem Funkzugangsnetzwerk des besuchten Mobilfunknetzwerkes und einer Benutzer-Ebene-Funktion des besuchten Mobilfunknetzwerkes.

10. Verfahren gemäß einem der Ansprüche 7 oder 9, ferner aufweisend:
Ermitteln (810), dass die Servervorrichtung keine Legacy-Schnittstelle mit dem Heim-Teilnehmerdienst unterstützt; und
Ablehnen des Benutzergerätes und/oder Umleitung (812) des Benutzergerätes zu einer zweiten Servervorrichtung in dem besuchten Mobilfunknetzwerk oder zu einem Legacy-Kernnetzwerk des besuchten Mobilfunknetzwerkes.

11. Computerlesbares Medium, das Anweisungen speichert, die, wenn sie von einem oder mehreren Prozessoren einer Servervorrichtung ausgeführt werden, bewirken, dass die Schritte des Verfahrens nach einem der Ansprüche 7 bis 10 durchgeführt werden.

## Revendications

1. Dispositif serveur (408) comprenant un ou plusieurs processeurs configurés pour :
identifier (502, 702) un réseau mobile domestique d'un équipement utilisateur qui tente d'effectuer une itinérance dans un réseau mobile visité comprenant le dispositif serveur ;
déterminer (710), sur la base d'informations préconfigurées dans le dispositif serveur, que le réseau mobile domestique est un réseau existant du réseau mobile visité ; et récupérer (714), à partir d'un service d'abonné domestique dans le réseau mobile domestique, des informations d'abonné pour l'équipement utilisateur ; et
configurer (510, 716) une connexion d'itinérance pour l'équipement utilisateur dans le réseau mobile visiteur.

2. Dispositif serveur selon la revendication 1, dans lequel les un ou plusieurs processeurs sont configurés pour récupérer les informations d'abonné en :
envoyant, sur une interface héritée, une demande d'informations d'abonné au service d'abonné domestique ; et
recevant, sur l'interface héritée, les informations d'abonné,
où, de préférence, l'interface héritée est une interface S6a qui utilise un protocole Diameter.

3. Dispositif serveur selon la revendication 1 ou la revendication 2, dans lequel les un ou plusieurs processeurs sont configurés pour configurer la connexion d'itinérance pour l'équipement utilisateur en :
établissant une connexion d'itinérance de routage domestique pour l'équipement utilisateur avec une passerelle de paquets du réseau mobile domestique, un réseau d'accès radio du réseau mobile visité et une fonction de plan utilisateur du réseau mobile visité, ou dans lequel les un ou plusieurs processeurs sont configurés pour configurer la connexion d'itinérance pour l'équipement utilisateur en :
établissant une connexion d'itinérance en sortie locale de type Local Breakout pour l'équipement utilisateur avec un réseau d'accès radio du réseau mobile visité et une fonction de plan utilisateur du réseau mobile visité.

4. Dispositif serveur selon l'une quelconque des revendications 1 ou 3, dans lequel les un ou plusieurs processeurs sont en outre configurés pour :
déterminer (810) que le dispositif serveur ne prend pas en charge une interface héritée avec le service d'abonné domestique ; et
rejeter l'équipement utilisateur et/ou rediriger (812) l'équipement utilisateur vers un deuxième dispositif serveur dans le réseau mobile visité ou vers un réseau central hérité du réseau mobile visité.

5. Dispositif serveur selon la revendication 4, dans lequel le dispositif serveur est une fonction de gestion d'accès et de mobilité du réseau mobile visité, et dans lequel le deuxième dispositif serveur est une deuxième fonction de gestion d'accès et de mobilité du réseau mobile visité qui prend en charge une interface héritée avec le service d'abonné domestique.

6. Dispositif serveur selon l'une quelconque des revendications 1 à 5, dans lequel les un ou plusieurs processeurs sont configurés pour déterminer (710), sur la base d'informations préconfigurées dans le dispositif serveur, que le réseau mobile domestique est un réseau existant du réseau mobile visité en :
référençant des informations préconfigurées dans le dispositif serveur qui identifient le service d'abonné domestique comme un composant du réseau mobile domestique.

7. Procédé de traitement de demandes d'itinérance au niveau d'un dispositif serveur, le procédé comprenant les étapes suivantes :
identifier (502) un réseau mobile domestique d'un équipement utilisateur qui tente d'effectuer une itinérance dans un réseau mobile visité comprenant le dispositif serveur ;
déterminer (710), sur la base d'informations préconfigurées dans le dispositif serveur, que le réseau mobile domestique est un réseau existant du réseau mobile visité ; et récupérer (714), à partir d'un service d'abonné domestique dans le réseau mobile domestique, des informations d'abonné pour l'équipement utilisateur ; et
configurer (510, 716) une connexion d'itinérance pour l'équipement utilisateur dans le réseau mobile visiteur.

8. Procédé selon la revendication 7, dans lequel la récupération des informations d'abonné à partir du service d'abonné domestique comprend les étapes suivantes :
envoyer, sur une interface héritée, une demande d'informations d'abonné au service d'abonné domestique ; et
recevoir, sur l'interface héritée, les informations d'abonné.

9. Procédé selon la revendication 7 ou la revendication 8, dans lequel la configuration de la connexion d'itinérance pour l'équipement utilisateur comprend :
l'établissement d'une connexion d'itinérance de routage domestique pour l'équipement utilisateur avec une passerelle de paquets du réseau mobile domestique, un réseau d'accès radio du réseau mobile visité et une fonction de plan utilisateur du réseau mobile visité.

10. Procédé selon l'une quelconque des revendications 7 ou 9, comprenant en outre les étapes suivantes :
déterminer (810) que le dispositif serveur ne prend pas en charge une interface héritée avec le service d'abonné domestique ; et
rejeter l'équipement utilisateur et/ou rediriger (812) l'équipement utilisateur vers un deuxième dispositif serveur dans le réseau mobile visité ou vers un réseau central hérité du réseau mobile visité.

11. Support lisible par ordinateur stockant des instructions qui, lorsqu'elles sont exécutées par un ou plusieurs processeurs d'un dispositif serveur, amènent le dispositif serveur à exécuter les étapes du procédé selon l'une quelconque des revendications 7 à 10.
